(19)

Europäisches
Patentamt
European
Patent Office
Office européen
des brevets

(11)  **EP 2 876 899 A1**

(12) # EUROPEAN PATENT APPLICATION

(43) Date of publication:
    **27.05.2015 Bulletin 2015/22**

(21) Application number: **13194036.3**

(22) Date of filing: **22.11.2013**

(51) Int Cl.:
    **H04R 25/00** (2006.01)    *G10L 17/26* (2013.01)
    *G10L 25/90* (2013.01)

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(71) Applicants:<br>• **Oticon A/S<br>2765 Smørum (DK)**<br>• **Bernafon AG<br>3018 Bern (CH)**<br><br>(72) Inventors:<br>• **Pedersen, Michael Syskind<br>DK-2765 Smørum (DK)**<br>• **Nilsson, Michael<br>DK-2765 Smørum (DK)**<br>• **Sommer, Peter<br>DK-2765 Smørum (DK)**<br>• **Petersen, Jan<br>DK-2765 Smørum (DK)**<br>• **Lunner, Thomas<br>DK-2765 Smørum (DK)**<br>• **Thule, Anders<br>DK-2765 Smørum (DK)**<br>• **Buetikofer, Janik<br>3018 Switzerland (CH)** | • **Poulsen, Henning Knak<br>DK-2765 Smørum (DK)**<br>• **Roug, Jacob Anders<br>DK-2765 Smørum (DK)**<br>• **Bendsen, Henrik<br>DK-2765 Smørum (DK)**<br>• **Albeck, Signe Frølund<br>DK-4040 Jyllinge (DK)**<br>• **Lamm, Jesko<br>3018 Switzerland (CH)**<br>• **Müller, Christian<br>3018 Switzerland (CH)**<br>• **Pedersen, Regin Kopp<br>DK-2765 Smørum (DK)**<br>• **Rygaard, Troels<br>DK-3460 Birkerød (DK)**<br>• **Borg, Carsten<br>DK-2765 Smørum (DK)**<br>• **Kaulberg, Thomas<br>DK-2765 Smørum (DK)**<br>• **Nielsen, Henrik<br>DK-2765 Smørum (DK)**<br><br>(74) Representative: **Nielsen, Hans Jørgen Vind<br>Oticon A/S<br>IP Management<br>Kongebakken 9<br>2765 Smørum (DK)** |

(54) **Adjustable hearing aid device**

(57)    A hearing aid device (2) and a hearing aid system (2, 10) are disclosed. The hearing aid device (2) comprises means for receiving signals (16) representing audio from a person (6). The signals (16) are transmitted from an external device (10, 10') that receives audio from the person (6). The hearing aid device (2) comprises means for analysing the transmitted signals (16). The hearing aid device (2) further comprises means for determining a number of predefined sound characteristics (8, 8', 8") of the audio from the person (6) based on the transmitted signals (16). The hearing aid device (2) comprises means for storing a number the determined sound characteristics (8, 8', 8") either in the hearing aid device or in an external device (10, 10'). The hearing aid device (2) comprises means for identifying when a signal (16) received from the external device (10, 10') comprises audio that originates from a person (6) having sound characteristics (8, 8', 8") stored in the hearing aid device or in an external device (10, 10').

EP 2 876 899 A1

Fig. 2

**Description**

**Field of invention**

The present invention generally relates to a hearing aid device capable of communicating with an external device such as a smartphone and to a hearing aid system comprising a hearing aid device and an external device. The present invention more particularly relates to a hearing aid device that is capable of recognising the voice of a person and performing a predefined processing of a sound signal when the voice of the person has been recognised.

**Prior art**

Hearing aid devices are to amplify sound for the hearing aid user, normally in order to make speech more intelligible or to correct impaired hearing as measured by audiometry.

When several persons are talking at the same time, e.g. when a plurality of people are gathered in the same room, it is difficult for a hearing aid user to hear the speech clearly and distinctly, especially if the room is small. In such noisy situations where comfort often has high priority, users may further prefer that the hearing solution provides a softer (less amplified) sound picture for comfort and/or mental energy conservation. Another situation is when listening to streamed audio where the surrounding sound is of secondary importance. The risk is that important voices in the environment may then not be heard.

In order to be able to prioritise the voice of a specific person among a group of people, the hearing aid somehow needs to be provided with specific information related to the voice of the person of interest.

Therefore, it is desirable to have a hearing aid device that is capable of providing such user specific information in an easy way.

It is one object of the present invention to provide a hearing aid device that is capable of prioritising the voice of a specific person among a group of talking people.

It is also an object of the present invention to provide a hearing aid device that is capable of providing specific information related to the voice of a person of interest in an easy way.

It is also an object of the present invention to provide a hearing aid device that is capable of automatically prioritising speech from a predefined person or to enhance the speech from a predefined person.

**Summary of the invention**

An object of the present invention can be achieved by a hearing aid as defined in claim 1. Preferred embodiments are defined in the dependent sub claims and explained in the following description and illustrated in the accompanying drawings.

The hearing aid according to the invention comprising a hearing aid device comprising means for receiving signals representing audio from a person, where the signals are transmitted from an external device that receives audio from the person, where the hearing aid device comprises means for analysing the transmitted signals (as received by the hearing aid device), where the hearing aid device (or the external device) further comprises means for determining a number of predefined sound characteristics of the audio from the person based on the transmitted signals. The hearing aid device (or the external device) comprises means for storing a number the determined sound characteristics either in the hearing aid device or in an external device and that the hearing aid device (or the external device) comprises means for identifying when a signal received from the external device comprises audio that originates from a person having sound characteristics stored in the hearing aid device or in an external device.

Hereby it is achieved that the hearing aid device can provide specific information related to the voice of a person of interest in an easy way.

It may be an advantage that the hearing aid device comprises means for receiving signals representing audio from a person during a phone conversation (with the person), where the signals are transmitted from an external device that receives audio from the person. In an embodiment, the external device comprises a cellular phone, e.g. a smartphone. In an embodiment, the external device comprises an auxiliary device, functioning as an intermediate device (e.g. in the form or an audio gateway) between a telephone and the hearing aid device.

The hearing aid according to the invention may be any type of hearing aid device.

In the present context, a "hearing aid device" refers to a device, such as e.g. a hearing aid, a listening device or an active ear-protection device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears.

A "hearing aid device" further refers to a device such as an earphone or a headset adapted to receive audio signals electronically, possibly modifying the audio signals and providing the possibly modified audio signals as audible signals to at least one of the user's ears. Such audible signals may e.g. be provided in the form of acoustic signals radiated into the user's outer ears, acoustic signals transferred as mechanical vibrations to the user's inner ears through the bone structure of the user's head and/or through parts of the middle ear as well as electric signals transferred directly or indirectly to the cochlear nerve and/or to the auditory cortex of the user.

A hearing aid device may be configured to be worn in any known way, e.g. as a unit arranged behind the ear with a tube leading air-borne acoustic signals into the ear canal or with a loudspeaker arranged close to or in the ear canal, as a unit entirely or partly arranged in the pinna and/or in the ear canal, as a unit attached to a fixture implanted into the skull bone, as an entirely or partly implanted unit, etc. A hearing aid device may comprise a single unit or several units communicating electronically with each other.

More generally, a hearing aid device comprises an input transducer for receiving an acoustic signal from a user's surroundings and providing a corresponding input audio signal and/or a receiver for electronically receiving an input audio signal, a signal processing circuit for processing the input audio signal and an output means for providing an audible signal to the user in dependence on the processed audio signal. Some hearing aid devices may comprise multiple input transducers, e.g. for providing direction-dependent audio signal processing. A forward path is defined by the input transducer(s), the signal processing circuit, and the output means.

In some hearing aid devices, the receiver for electronically receiving an input audio signal may be a wireless receiver. In some hearing aid devices, the receiver for electronically receiving an input audio signal may be e.g. an input amplifier for receiving a wired signal. In some hearing aid devices, an amplifier may constitute the signal processing circuit. In some hearing aid devices, the output means may comprise an output transducer, such as e.g. a loudspeaker for providing an air-borne acoustic signal or a vibrator for providing a structure-borne or liquid-borne acoustic signal. In some hearing aid devices, the output means may comprise one or more output electrodes for providing electric signals.

In some hearing aid devices, the vibrator may be adapted to provide a structure-borne acoustic signal transcutaneously or percutaneously to the skull bone. In some hearing aid devices, the vibrator may be implanted in the middle ear and/or in the inner ear. In some hearing aid devices, the vibrator may be adapted to provide a structure-borne acoustic signal to a middle-ear bone and/or to the cochlea. In some hearing aid devices, the vibrator may be adapted to provide a liquid-borne acoustic signal in the cochlear liquid, e.g. through the oval window. In some hearing aid devices, the output electrodes may be implanted in the cochlea or on the inside of the skull bone and may be adapted to provide the electric signals to the hair cells of the cochlea, to one or more hearing nerves and/or to the auditory cortex.

A "hearing aid system" refers to a system comprising one or two hearing aid devices, and a "binaural hearing aid system" refers to a system comprising two hearing aid devices and being adapted to cooperatively provide audible signals to both of the user's ears. Hearing aid systems or binaural hearing aid systems may further comprise "auxiliary devices" (here e.g. termed an 'external device'), which communicate with the hearing aid devices and affect and/or benefit from the function of the hearing aid devices. Auxiliary devices may be e.g. remote controls, remote microphones, audio gateway devices, mobile phones (e.g. smartphones), public-address systems, car audio systems or music players. Hearing aid devices, hearing aid systems or binaural hearing aid systems may e.g. be used for compensating for a hearing-impaired person's loss of hearing capability, augmenting or protecting a normal-hearing person's hearing capability and/or conveying electronic audio signals to a person.

The hearing aid device according to an embodiment of the invention comprises means for receiving signals representing audio from a person. These means may be any suitable means e.g. means for receiving wirelessly transmitted data from a smartphone being applied to conduct a phone conversation.

The means (in the hearing aid device) for receiving signals representing audio from a person preferably comprises a first wireless interface comprising first antenna and transceiver circuitry adapted for establishing a communication link to the external device (and/or to another hearing aid device) based on near-field communication (e.g. inductive, e.g. at frequencies below 100 MHz) and/or a second wireless interface comprising second antenna and transceiver circuitry adapted for establishing a second communication link to the external device (and/or to another hearing aid device) based on far-field communication (radiated fields (RF), e.g. at frequencies above 100 MHz, e.g. around 2.4 or 5.8 GHz).

The external device may be any suitable type of device e.g. a phone that receives audio from the person. The external device preferably comprises a wireless interface comprising antenna and transceiver circuitry adapted for establishing a communication link to the hearing aid device. The audio may comprise speech.

In the present context, a smartphone, may comprise

- a (A) cellular telephone comprising a microphone, a speaker, and a (wireless) interface to the public switched telephone network (PSTN) COMBINED with
- a (B) personal computer comprising a processor, a memory, an operative system (OS), a user interface (e.g. a keyboard and display, e.g. integrated in a touch sensitive display) and a wireless data interface (including a Web-browser), allowing a user to download and execute application programs (APPs) implementing specific functional features (e.g. displaying information retrieved from the Internet, remotely controlling another device, combining information from various sensors of the smartphone (e.g. camera, scanner, GPS, microphone, etc.) and/or external sensors to provide special features, etc.).

The hearing aid device comprises means for analysing the transmitted signals (as received from the external device by the hearing aid device). These means may be of any suitable type and e.g. embodied in an analysis unit. The means for receiving wirelessly transmitted signals comprise suitable antenna and receiver circuitry.

The hearing aid device (or the external device) further comprises means for determining a number of predefined sound characteristics of the audio from the person based on the transmitted signals.

The means may include a processor capable of providing any known type of analysis.

The hearing aid device (or the external device) comprises means for storing a number the determined sound characteristics either in the hearing aid device or in an external device. The storing means may be of any type and size.

It is a huge advantage that the hearing aid device comprises means for - in a normal mode of operation - identifying when a signal received from the external device (and/or a signal from an input transducer of the hearing aid device) comprises audio that origins from a person having sound characteristics stored in the hearing aid device or in an external device. This may be done by using any suitable manner as will be explained in the following.

In an embodiment, a voice (audio) that origins from a specific person is tagged (with a tag). Tagging selected voices of high priority (VIP) allows the hearing aid device to give these voices higher relative priority or amplification making it easier for the hearing impaired to note and understand speech from the VIP persons.

It may be an advantage that the hearing aid device comprises means for processing a signal in a predefined manner (e.g. a signal processing unit) in order to provide enhancement of audio that originates from a person having sound characteristics stored in the hearing aid device or in an external device.

Hereby it is achieved that the hearing aid device is capable of prioritising the voice of a specific person among a group of speaking people.

It is also achieved that the hearing aid device that is capable of automatically prioritising speech from a predefined person or to enhance the speech from the predefined person.

It may be an advantage that the hearing aid device comprises means for processing a signal (of the forward path), e.g. a signal processing unit, in a predefined manner (in a normal mode of operation) in order to provide attenuation or gain of audio that originates from a person having sound characteristics stored in the hearing aid device or in an external device.

In an embodiment, comprising a normal mode of operation, the signal of the forward path of the hearing aid device comprises a signal picked up by an input transducer for receiving an acoustic signal from a user's surroundings or a signal received by a receiver for electronically receiving an input audio signal, e.g. from a telephone or a microphone.

In an embodiment, the hearing aid device comprises an input transducer for receiving an acoustic signal from a user's surroundings and providing a corresponding input audio signal and/or a receiver for electronically receiving an input audio signal, a signal processing circuit for processing the input audio signal and an output means for providing an audible signal to the user in dependence on the processed audio signal, a forward path being defined by the input transducer(s), the signal processing circuit, and the output means, wherein the signal processing unit - (n a normal mode of operation - is configured to process a signal of the forward path in a predefined manner in order to provide attenuation or gain of an input audio signal that originates from a person having sound characteristics stored in the hearing aid device or in an external device.

It may be beneficial that the hearing aid device comprises means (e.g. a frequency analysis unit) for identifying the fundamental frequency and/or pitch of a person on the basis of the audio from the person.

Hereby it is possible to identify voice specific characteristics that can be used to identify the voice of a person afterwards.

It may be advantageous that the hearing aid device (or the external device) comprises means for identifying variations in fundamental frequency or pitch of a person on the basis of the audio from the person.

In this way it is possible to apply variations in fundamental frequency or pitch as identification parameters when identifying the voice of a person.

It may be an advantage that the hearing aid device (or the external device) comprises means for identifying the rhythm and/or breathiness and/or the strength of vocal effort of a person on the basis of the audio from the person.

It may be beneficial that the hearing aid device (or the external device) comprises means for identifying the mean value and/or the standard deviation of the fundamental frequency distribution curve.

These parameters may be used to establish a more sophisticated picture of the voice of a person and thus a more accurate identification can be achieved afterwards.

It may be an advantage that the hearing aid device (or the external device) comprises means for analysing the transmitted signals during a phone conversation.

Hereby it is possible to "train" the hearing aid device in identifying a person during a phone conversation.

It may be advantageous that the hearing aid device comprises (or the external device) means for storing the sound characteristics of a person and coupling the phone number of the person with the sound characteristics. In an embodiment, the sound characteristics of a person is associated with a tag or label.

Hereby it is easy to compare the sound characteristic of a person with the data stored in the hearing aid device.

It may be beneficial that sound characteristics are automatically linked to a person based on the phone number of the person. The phone number may be located from the contact list on the phone.

It may be an advantage that the hearing aid device (or the external device) comprises means (e.g. an MP3 or MP4 encoder/decoder) for applying the Motion Picture Expert Group (MPEG) standard to encode mixed media data (video, audio, speech).

Hereby it is possible to allow coding of multiple objects. It is able to manipulate, enhance and prioritise each of a predefined number of objects in a sound scene, separately.

It may be beneficial that the hearing aid device (or the external device) comprises means for setting at least a subset of the settings of the hearing aid device in dependence of the location of the user of the hearing aid.

Hereby it is possible to automatically control the hearing aid settings on the basis of the location of the hearing aid user.

The location of the user may be determined by the position of an external device held by or attached to the user of the hearing aid. This may be done by using a GPS receiver in the external device.

In this way the settings of a hearing aid device according to an embodiment of the invention may be determined merely on the basis of position data provided by a build-in GPS receiver in the external device or in the hearing aid.

The settings of a hearing aid device is determined on the basis of position data provided by a GPS receiver in a smartphone and corresponding location dependent set of rules.

It may be advantageous that the hearing aid device comprises means for communicating with at an external device by means of light or sound.

Hereby it is possible to establish communication by simple means.

The light may be light within the visual spectrum or light outside the visible spectrum, e.g. infrared light.

It may be beneficial that the hearing aid device comprises means for receiving or interfacing to one or more applications (APPs), the one or more applications being e.g. executed on the external device, e.g. a smartphone and/or in the hearing aid device.

Hereby it is possible to improve/modify the scope of usage of a hearing aid device over time.

An application may be a feature or function providing a new way of applying or controlling the hearing aid device or treating data received by the hearing aid device.

By using a hearing aid device according to an embodiment of the invention it may be possible get access to other applications for a specific time, e.g. one week or one month, e.g. for a specific purpose or for testing after which a purchase can be decided. The applications may e.g. be downloaded via the Internet and installed on the hearing aid device and/or the external device.

In this way, it is possible to update a hearing aid device when required. Over the years, the hearing aid device may be updated to comprise all the applications that the hearing aid user finds useful.

It may be an advantage that the hearing aid device (or the external device) comprises a sensor member (e.g. a number of individual sensor units) configured to detect a number of predefined parameters.

Hereby the hearing aid device (or the external device) may detect a parameter that provides useful information about the user of the hearing aid device. Accordingly, this information may be used in the hearing aid device, e.g. immediately or later on, e.g. in order to adjust settings of the hearing aid device.

The sensor member or unit may comprise means for detecting electromagnetic radiation. The sensor unit may comprise a voice activity detector.

The sensor unit may be attached to the outside layer of the hearing aid device (e.g. to the outside of the casing of the hearing aid device).

It may be advantageous that the hearing aid device does not comprise any microphone and that the hearing aid device comprises means for receiving a wirelessly transmitted signal representing audio picked up by one or more microphone(s) of an external device (e.g. a smartphone) transmitting the signal. Further, some of the audiological (user specific) processing of the input audio signal may be performed in the external device before the resulting enhanced signal is transmitted to the hearing aid device (e.g. an (invisible) in-the-canal hearing aid device), thereby saving space and power in the hearing aid device.

Hereby it is possible to provide a small and compact hearing aid device, e.g. an in-the-canal type hearing aid device.

In an embodiment, the hearing aid device comprises a microphone unit as well as a wireless receiver unit (e.g. antenna and transceiver circuitry).

It may be beneficial that the hearing aid device (or the external device) comprises means for recording and storing audio at the hearing aid device or at an external device, where the hearing aid device moreover comprises means for playing the recorded audio.

Hereby it is possible for the hearing aid user to replaying recorded speech that the hearing aid user did not hear clearly and distinctly.

It may be beneficial that the hearing aid device comprises means for storing sound characteristics of a person centrally at a predefined location at the Internet and/or at a (dedicated) server.

Hereby it is possible for several different hearing aid users to store data related to the same person or to different persons centrally. In this way a larger amount of data will be available.

It may be an advantage that hearing aid device comprises means for continuously recording the last predefined time period, e.g. 15 seconds or more, such as 60 seconds or more.

It may be beneficial that the hearing aid device comprises means for marking (e.g. tagging or labelling) parts of a recorded sound. Hereafter it is possible to locate the part of a conversation that is marked afterwards. This may be an advantage because it can save the hearing aid user from spending a lot of time trying to locate the part of a conversation that he wants to listen to again.

It may be advantageous that the hearing aid comprises means for predicting sound that the hearing aid user most likely would like to have repeated (listen to again). These means may include means for locating proper pauses in the speech signal and means for suggesting sentences/words for the hearing aid user.

Hereby, the hearing aid user will be able to replay a suggested sentence/word on demand.

It may be an advantage that the hearing aid device comprises or is coupled to an additional device, e.g. the external device, e.g. an audio gateway, a smartphone or other devices capable of recording, storing and playing the recorded soundtrack.

In a further aspect, a hearing aid *system* is provided. The hearing aid system comprises a hearing aid device and an external device. The hearing aid device comprises means for receiving signals representing audio from a person (e.g. a wireless receiver), where the signals are transmitted from the external device (e.g. a telephone or a microphone) that receives audio from the person, where the hearing aid system comprises means for analysing the transmitted signals (e.g. an analysis unit). The hearing aid system further comprises means for determining a number of predefined sound characteristics of the audio from the person based on the transmitted signals. The hearing aid system comprises means for storing (e.g. a memory) a number of the determined sound characteristics (e.g. a fundamental frequency). The hearing aid device comprises means for identifying when a signal received from the external device comprises audio that originates from a person having sound characteristics stored in the hearing aid system.

In an embodiment, the hearing aid device comprises an input transducer for receiving an acoustic signal from a user's surroundings and providing a corresponding input audio signal and/or a receiver for electronically receiving an input audio signal, a signal processing circuit for processing the input audio signal and an output means for providing an audible signal to the user in dependence on the processed audio signal, a forward path being defined by the input transducer(s), the signal processing circuit, and the output means, wherein the signal processing unit - in a normal mode of operation - is configured to process a signal of the forward path in a predefined manner in order to provide attenuation or gain of an input audio signal that originates from a person having sound characteristics stored in the hearing aid.

In an embodiment, the hearing aid device comprises means for processing a signal in a predefined manner in order to provide enhancement or attenuation of audio that originates from a person having sound characteristics stored in the hearing aid system.

In an embodiment, the hearing aid device and the external device are configured to run an APP allowing a user to control or influence functionality of the hearing aid device or to process or display information related to the hearing aid device. The APP may e.g. be configured to allow a user to identify a currently received audio signal as a signal from a specific person previously identified in the hearing aid system. The APP may e.g. be configured to allow a user to identify a current acoustic environment. The APP may e.g. be configured to allow a user to select times or events (e.g. related to calendar entries, where and how a tinnitus sequence is to be applied to an output signal forwarded to the user).

In an embodiment, the hearing aid system is configured to enable printing via the external device.

**Description of the Drawings**

The invention will become more fully understood from the detailed description given herein below. The accompanying drawings are given by way of illustration only, and thus, they are not limitative of the present invention. In the accompanying drawings:

Fig. 1      shows a schematic view of a hearing aid user wearing a hearing aid according to an embodiment of the invention and using the hearing aid device during a phone conversation;

Fig. 2      shows a schematic view of the hearing aid user shown in Fig. 1 receiving sound inputs from one of several predefined persons;

Fig. 3 a)      shows a schematic view of the steps that can be applied in order to train a hearing aid device according to an embodiment of the invention;

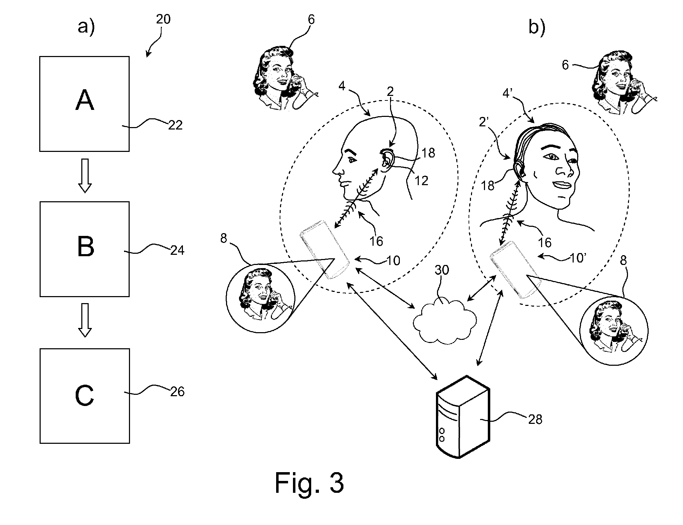

Fig. 3 b)      shows a schematic view of how information from two different hearing aid users talking to the same person

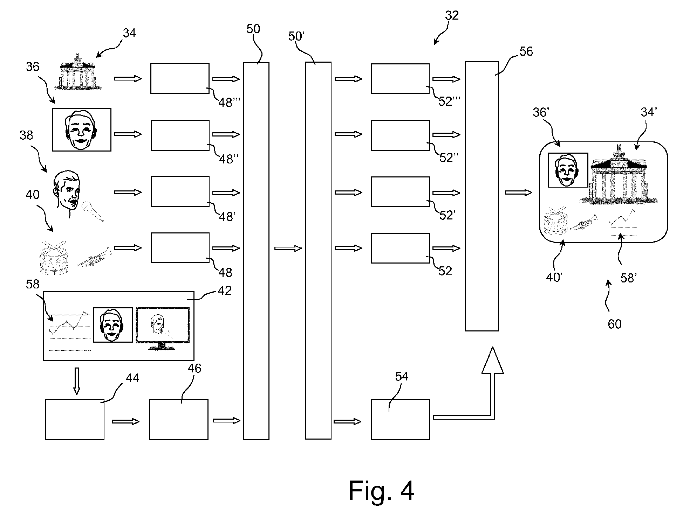

Fig. 4        shows a schematic view of one example of how object-based coding can be applied in relation to hearing aid device according to an embodiment of the invention;

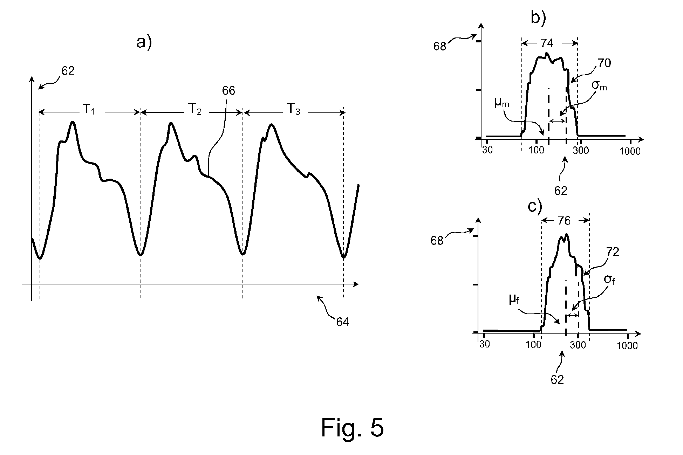

Fig. 5 a)    shows an amplitude-time curve;

Fig. 5 b)    shows the fundamental frequency distribution for a male person;

Fig. 5 c)    shows the fundamental frequency distribution for a female person;

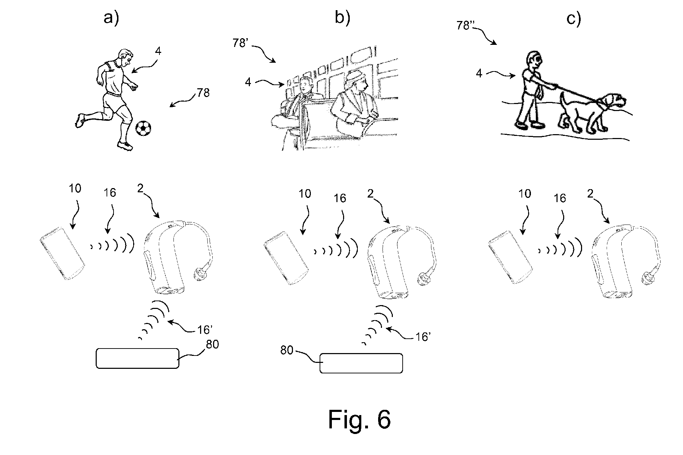

Fig. 6 a)    shows a schematic view of how the settings of a hearing aid according to an embodiment of the invention are changed when the hearing aid user is doing sport;

Fig. 6 b)    shows a schematic view of how the settings of a hearing aid according to an embodiment of the invention are changed when the hearing aid user is traveling by bus or train;

Fig. 6 c)    shows a schematic view of how the settings of a hearing aid according to an embodiment of the invention are changed when the hearing aid user is outside walking his dog;

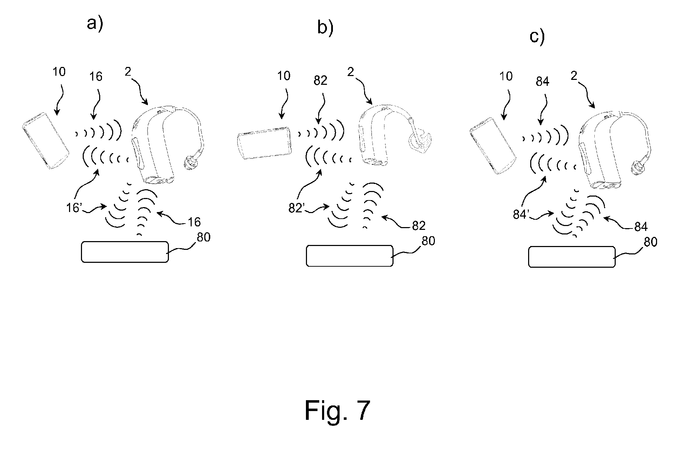

Fig. 7        shows three schematic views of how an external device is communicating with a hearing aid device according to an embodiment of the invention;

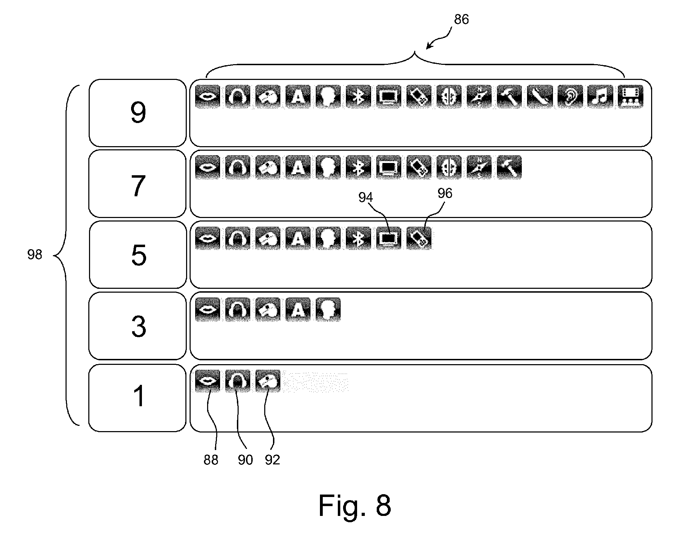

Fig. 8        shows a schematic view of additional applications that may be added to a hearing aid device according to an embodiment of the invention;

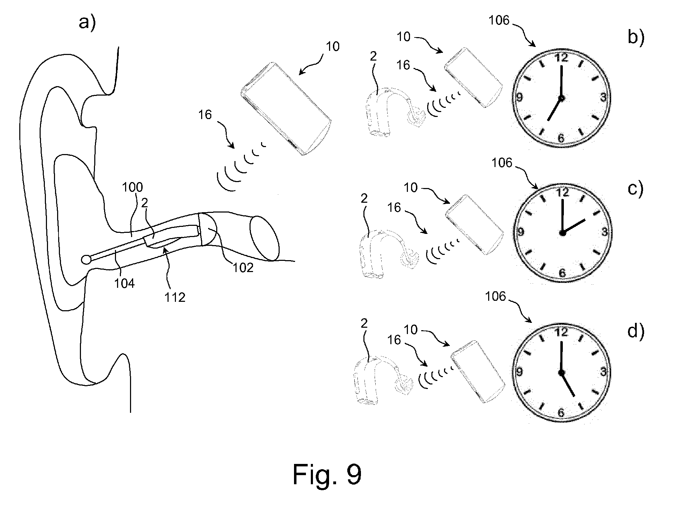

Fig. 9 a)    shows a schematic view of a hearing aid device according to an embodiment of the invention that is receiving information from an external device;

Fig. 9 b)-d) show schematic views of a hearing aid device according to an embodiment of the invention that is receiving time dependent information from an external device in the morning (Fig. 9b)), in the afternoon (Fig. 9c)), and at the end of a workday (e.g. during the way back from work) (Fig. 9d));

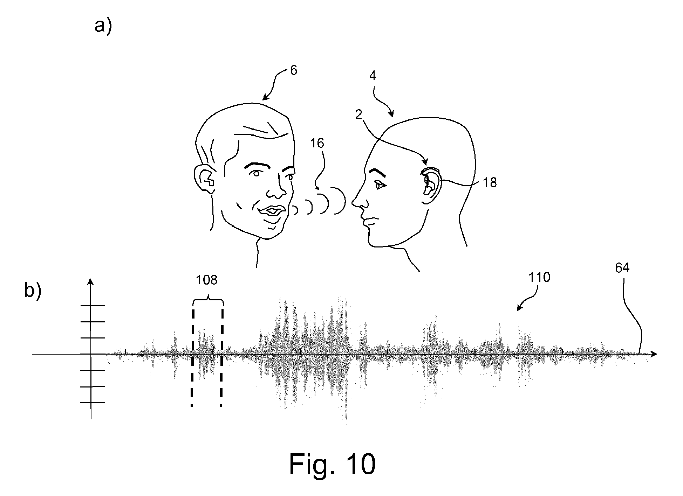

Fig. 10 a)   shows a schematic view of a person speaking to a hearing aid user wearing a hearing aid device according to an embodiment of the invention;

Fig. 10 b)   shows an example of a recorded soundtrack by using a hearing aid device according to an embodiment of the invention; and

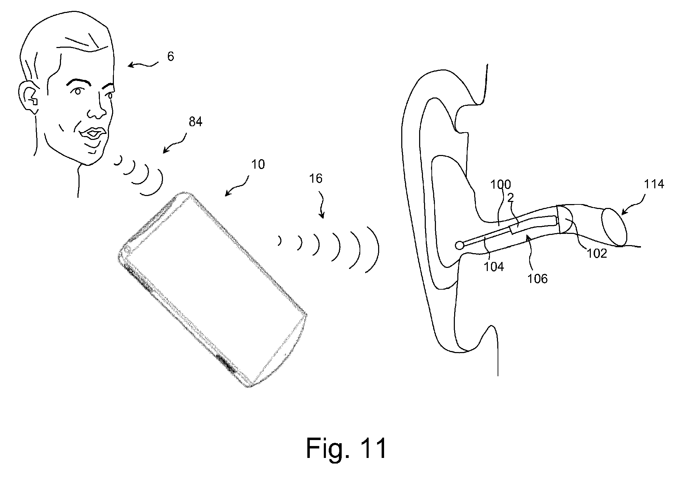

Fig. 11      shows a schematic view of a person speaking to a hearing aid user wearing an in-the-canal hearing aid according to an embodiment of the invention;

## Detailed description of the invention

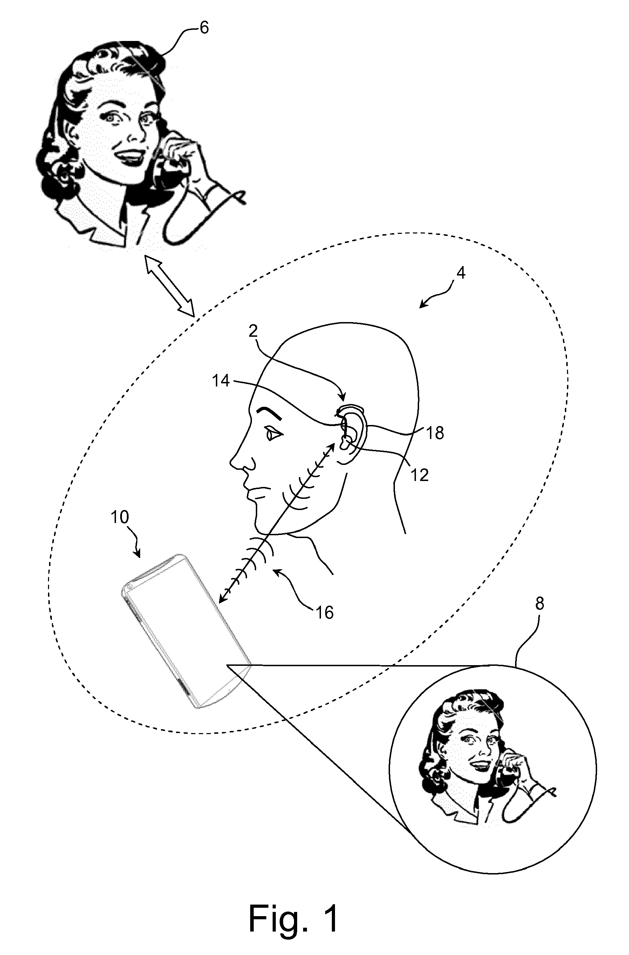

Referring now in detail to the drawings for the purpose of illustrating preferred embodiments of the present invention, different views of a hearing aid 2 according to an embodiment of the invention is illustrated in Fig. 1.

Fig. 1 is a schematic view of a hearing aid user 4 wearing a hearing aid 2 according to an embodiment of the invention. The hearing aid device is a behind-the-ear (BTE) hearing aid device comprising an ear hook 14 that connects the casing with an earmould 12 that has been inserted into the ear 18 of the hearing aid user 4.

The hearing aid user 4 is using the hearing aid device 2 to have a phone conversation with a person 6. The phone conversation takes places by using an external device 10 in the form of a smartphone 10 that is sending signals 16 wirelessly to the hearing aid device 2.

The hearing aid user 4 can answer the person 6 by using the smartphone 10 on a regular basis by means of the microphone of the smartphone 10 (or alternatively by the microphone(s) of the hearing aid device).

During the conversation, the hearing aid device 2 detects the sound signals representing the speech of the person 6. Furthermore, the hearing aid device 2 or the smartphone 10 comprises means (a speech recogniser, e.g. a frequency analysing unit) for analysing the speech from the person 6 and means for determining a number of sound characteristics 8 of the person 6. In this way the hearing aid device will be able to recognise when the person 6 is speaking in a future occasion (by comparison of characteristics of a future audio signal comprising speech with stored characteristics of said person 6).

The sound characteristics 8 of the person 6 are stored in the smartphone 10 or in the hearing aid device 2. In this way, it is possible to give priority to the person 6 in a later occasion, if desired. The hearing aid user 4 may select the person 6 as being "important" (as part of a tag or label) so that the person 6 will be prioritised in a group of several people talking.

According to the present disclosure, it is possible to automatically train a speech recogniser during the phone conversation. Since most phones are mainly used by a single person, the phone number may be used for identification of the person 6. The sound characteristics 8 of a specific speaker (e.g. person 6) can be trained based on the identification of the phone number e.g. with the purpose of recognising the person 6 in the future (based on the stored sound characteristics), including conversations that does not involve phones. This has the advantage that the training phase can be 'automatically' performed so that no particular extra training is necessary, thereby saving time.

Hereby it will be possible to automatically prioritise the person 6 or to enhance (e.g. by filtering or amplification of specific frequency ranges) the speech of the person 6 based on the trained data.

The sound characteristics data 8 may automatically be linked to the person 6 based on the phone number, which e.g. is connected to the contact list on the phone 10. Several persons may be trained on the phone during different phone conversations.

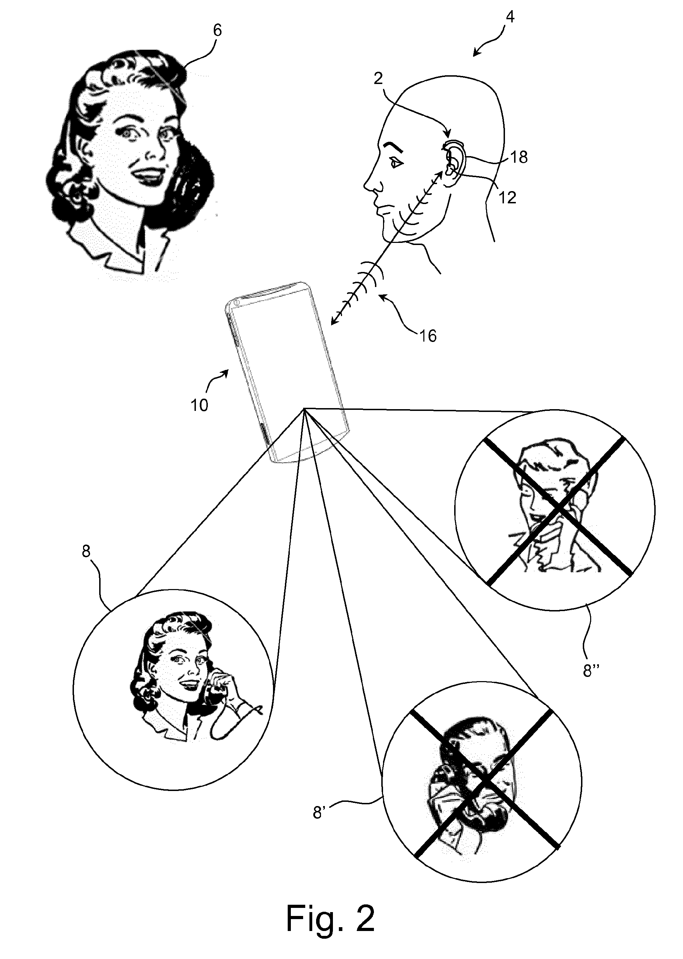

Fig. 2 is a schematic view of the hearing aid user 4 shown in Fig. 1 receiving sound inputs from one of several persons, having different (predefined) sound characteristics 8, 8', 8" (here stored in the external device).

The hearing aid user 4 wears a pair of BTE (Receiver in the ear, RITE) hearing aid devices 2 (e.g. of a binaural hearing aid system) transmitting sound into the respective ear canals through respective open fittings each comprising a loudspeaker and a flexible dome that are inserted into the respective ear canals. The hearing aid user 4 receives signals 16 from an external device 10. The external device 10 is a mobile phone 10.

Prior to the shown situation the hearing aid device 2 has been "trained" to recognise the person 6. Accordingly, the sound characteristics 8 of person 6 are stored and available (e.g. stored) in the phone 10. It may be possible to store sound characteristics of persons, animals, or predefined sounds (a door bell signal) in the hearing aid device 2 and/or in an external device (e.g. a smartphone) 10.

The sound characteristics 8', 8" of the other two speaking persons have also been detected previously. Accordingly, the sound characteristics 8', 8" of the other two speaking persons are stored and available in either the smartphone 10 or the hearing aid device 2.

Therefore, the smartphone 10 deprioritises the sound input from persons not having available matching characteristics (or deprioritises sound input from persons *with* available matching characteristics, *if* such characteristics have been classified (e.g. tagged or labelled) as 'un-interesting'), while the smartphone 10 provides optimal enhancement of the sound signal of a recognised (not 'negatively tagged') person 6. As a consequence, the hearing aid user 4 can hear the person 6 clearly and distinctly even though several persons are talking at the same time. Accordingly, the hearing aid according to an embodiment of the invention may be extremely beneficial for the hearing aid user 4 when several persons are talking at the same time.

The hearing aid device 2 and/or the smartphone 10 may comprise means for individually changing the settings including the persons (and/or sounds) to be prioritised.

Fig. 2 illustrates a situation where the sound characteristics 8 from the audio are picked up by the microphones of the hearing aid or by the microphone of the smartphone 10. The sound characteristics 8 are compared to sound characteristics from previously trained phone conversations. Since the voice of the person 6 is recognised, the hearing aid settings provides optimal enhancement of the recognised person 6. A comparison of sound characteristics of a current audio input signal with stored sound characteristics of already recognized voices can e.g. be based on a comparison of a mathematical or statistical distance measure. In an embodiment, a distance measure is determined for each parameter of the sound characteristics. In an embodiment, the fundamental frequencies of a current audio input signal and those of already recognized voices are compared by a regression analysis, e.g. a least squares method. In an embodiment, the comparison comprises a criterion regarding a distance measure, e.g. that a match is detected if the distance measure (DM) is smaller than or equal to a threshold value ($DM \leq DM_{th}$).

During the fitting process or at home, a hearing care professional (HCP) or a user has the possibility to record specific (VIP) voices considered of special interest to the user. Each voice is characterized by the hearing aid device and the 'fingerprint' (sound characteristics) is saved for future use. During daily use, the hearing aid device constantly analyses the sound environment and compares it with the stored VIP fingerprints to detect if one or more of the VIP voices are present in the sound signal. When this is the case, those voices are given priority (e.g. amplified or the general sound level is raised).

Alternative or supplemental methods of determining a voice fingerprint may include:

1. dynamic selection and classification of specific voices as having high priority or low priority, e.g. using a directional microphone.
2. training during fitting (e.g. spouse)
3. classification of a specific voice using an APP while the person speaks alone.
4. classification of a specific voice using an APP based on a visual spatial mapping of current speakers/sound sources as high priority or low priority sound sources (for amplification and attenuation, respectively).

Fig. 3 a) is a schematic view of the steps 22 (A), 24 (B), 26 (C) that can be applied in order to train a hearing aid device 2 or a hearing aid system according to an embodiment of the invention.

The training process 20 is indicated by means of three boxes 22, 24, 26 each representing a process step. The first box 22 symbolised with the letter A, contains two steps:

a) training the hearing aid device 2 (or the hearing aid system) during phone conversations
and
b) storing the sound characteristics 8 in the hearing aid device 2 or in an external device (e.g. a smartphone) 10.

The second box 24 symbolised with the letter B, contains the following step:

c) the sound characteristics 8 of the audio picked up by the microphone(s) of the hearing aid device 2 or by the microphone(s) of the external device (e.g. a smartphone) 10 is compared to stored data 8, 8', 8" in the hearing aid device 2 or in the external device (e.g. a smartphone) 10.

The third box 2 symbolised with the letter C, contains the following step:

c) the sound characteristics 8 of the audio picked up by the microphone(s) of the hearing aid device 2 or by the microphone(s) of the smartphone 10 is compared to stored data 8 in the hearing aid device 2 or in the external device (e.g. a smartphone 10).

If the detected sound characteristics 8 is recognised (matches one of the stored sound characteristics 8, 8', 8"), the person 6 speaking is prioritised and the hearing aid device signal processing is adapted towards the particular person 6.

Fig. 3 b) is a schematic view of how information from two different (first and second) hearing aid users 4, 4' talking to the same person 6 (in a training procedure) can be centrally stored. It is important to underline that the two different hearing aid users 4, 4' may be talking to the person 6 at different time periods allthough both hearing aid users 4, 4' are shown at Fig. 3 b).

The first (and second) hearing aid user 4 (4') is wearing a BTE hearing aid device 2 (2') attached behind the ear 18 of the hearing aid user 2 (2'). The sound is transmitted to the ear canal of the hearing aid user 2 (2') through an earmould 12 arranged in the ear canal. The hearing aid device 2 (2') communicates wirelessly with an external device 10 (10') such as a smartphone 10 (10').

The hearing aid user 4 (4') is having a phone conversation with a person 6. The phone conversation takes place by means of the smartphone 10 (10') that is sending signals 16 wirelessly to the hearing aid device 2 (2'). The speech from the person 6 is received by the smartphone 10 (10') that wirelessly transmits a signal 16 representative thereof to the hearing aid device 2 (2'). The hearing aid device 2 (2') generates audio that is transmitted to the ear canal of the hearing aid user via the ear mould 12.

During the conversation the hearing aid device 2 (2') and/or the smartphone 10 (10') detects audio from the person 6. The audio is analysed by the hearing aid device 2 (2') and/or the smartphone 10 (10') and hereby the sound characteristics 8 of the person 6 are determined.

The sound characteristics 8 of the person 6 are stored locally in the smartphone 10 (10') and/or in the hearing aid device 2 (2'). The sound characteristics 8 of the person 6 are also stored centrally at a predefined location on the Internet 30 and/or on a (dedicated) server 28. In this way, it is possible to recognize and/or prioritise the person 6 later on.

Accordingly, characteristics 8 of the person 6 are the person 6 are provided by both the first hearing aid device 2 and by the second hearing aid device 2'. In this way the amount of "training data", characteristics 8, can be increased.

Fig. 4 is a schematic view of one example of how object-based coding can be applied in relation to a hearing aid device 2 (or a hearing aid system) according to an embodiment of the invention. Fig. 4 shows a coding procedure 32 that is suitable of being used when applying a hearing aid device 2 according to an embodiment of the invention.

A sound scene 42 is shown at the left side of Fig. 4. The sound scene 42 contains several objects 34, 36, 38, 40, 58. The user 4 of a hearing aid 2 according to an embodiment of the invention may be allowed to enhance each object 34, 36, 38, 40, 58 in a sound scene 42 separately, hereby manipulating the whole sound scene 42.

The first object 34 is a building, the Supreme Court 34 of the United States of America. The sound scene 42 covers an event taking place in the Supreme Court 34 of the United States. The event is covered by television (TV) and a journalist reports the event in a TV reportage 36 as indicated in the (upper) left side of Fig. 4. Other comments 38 to the event and music 40 are provided as separate sound channels. A curve 58 showing financial trends, a logo and a picture frame are presented as a separate video scene.

The hearing aid device 4 or hearing aid system (e.g. the external device 10) may apply an encoding scheme, e.g. a Motion Picture Expert Group (MPEG) standard that has the ability to encode (compress) media data (video, audio, speech) from each individual sound and/or video scene (34, 36, 38, 40) and to e.g. create a mixed video and sound scene 42 (or 60).

The hearing aid device 4 or the hearing aid system may preferably use the so-called "MPEG-4 standard" (MP4) that allows coding of multiple objects 34, 36, 38, 40, 58. One way to code different speakers (or other sounds) in a sound scene would be through the MPEG-4 standard. By displaying the different objects (separate speakers, music, babble etc.) 34, 36, 38, 40, 58 from a sound scene 42 the user 4 of the hearing aid device 2 is able to manipulate, enhance and prioritise each of the objects 34, 36, 38, 40, 58 in the sound scene 42, separately.

Each of the objects 34, 36, 38, 40, 58 are coded by means of compressors 48, 48', 48", 48"' (e.g. MP4) connected to a delivery interface 50. The scene descriptor 44 is indicated at the lower left side of Fig. 4. The scene descriptor is compressed by means of a compressor 46 that is connected to the delivery interface 50.

Fig. 4 comprises a second delivery interface 50' receiving data (e.g. wirelessly) from the first delivery interface 50. The data received by the second delivery interface 50' is decompressed by means of decompressors 52, 52', 52", 52" (e.g. MP4) corresponding to the objects 34, 36, 38, 40, 58, respectively.

The decompressors 52, 52', 52", 52" and the decompressor 54 send decompressed data to a compositor 56 that generates the output multimedia scene 60 on a user interface (e.g. an external device, e.g. a smartphone) of a hearing aid device or a hearing aid system. The output 60 contains the objects 34', 36', 40', 58' mixed corresponding to the manipulation applied to the sound scene 42.

The "manipulated" objects 34', 36', 40', 58' shown on the user interface includes: a "manipulated" curve 58' showing financial trends presented with corresponding audio, the "manipulated" Supreme Court 34' of the United States feature accompanied by speech and video, the "manipulated" TV reportage 36' with audio and video and the "manipulated" music feature 40'.

Fig. 5 a) schematically illustrates an amplitude-time curve 66 of a speaking person. The curve 66 depicts amplitude 62 versus time 64. It can be seen that the curve contains periodic portions of basically equal time periods $T_1$, $T_2$, $T_3$.

The fundamental frequency is defined as the lowest frequency 62 of a periodic waveform. Expressed in terms of a superposition of sinusoids

(e.g. Fourier series), the fundamental frequency is the lowest frequency sinusoidal in the sum. Human voiced speech of a typical adult male has a fundamental frequency in the range between 85 and 180 Hz. A typical adult female has a fundamental frequency in the range between 165 and 255 Hz. A hearing aid device adapted to a specific type of voice is e.g. described in EP 2 081 405 A1.

The fundamental frequency, F, can be determined as the inverse of the time periods $T_1$, $T_2$, $T_3$ indicated in Fig. 5a). Assuming that $T_2$ represents the time period it follows that:

$$(1) \qquad F = \frac{1}{Time\ period} = \frac{1}{T_2}$$

Thus if $T_2$ is 10 milliseconds the fundament frequency, F, is given by:

$$(2) \qquad F = \frac{1}{Time\ period} = \frac{1}{0.01\ \mathrm{sec}} = 100 Hz$$

This would correspond to a male voice.

Fig. 5 b) schematically illustrates a fundamental frequency distribution curve 70 for a *male* person. The fundamental frequency distribution curve 70 shows the probability 68 as function of frequency (measured in Hz). The mean value $\mu_m$ as well as the standard deviation $\sigma_m$ are indicated. Moreover, the frequency range 74 of the fundamental frequency distribution curve 70 is indicated. It is possible to determine the first derivative or the second derivative of a predefined point or portion of the fundamental frequency distribution curve 70 and use this as a user specific parameter.

The above mentioned parameters may be significant for a person and thus, these parameters may be part of the sound characteristics 8 that are stored for a person (as classifiers of the voice of the person in question).

Fig. 5 c) schematically illustrates a fundamental frequency distribution 72 for a *female* person. The fundamental frequency distribution curve 72 depicts probability 68 as function of frequency 62 like in Fig. 5 b). The mean value $\mu_f$ and the standard deviation $\sigma_f$ are shown in the figure. Besides, the frequency range 76 of the fundamental frequency distribution curve 72 is shown.

When comparing Fig. 5 b) and Fig. 5 c) it can be seen that the mean value $\mu_m$ for the male person is lower than the mean value $\mu_f$ for the female person.

Fig. 6 a) is a schematic view of how the settings of a hearing aid device 2 according to an embodiment of the invention are changed when the hearing aid user is doing sport in a sport location 78. The location 78 may be a training ground, a training hall or any suitable location for doing sport.

The hearing aid user 4 is wearing a hearing aid device 2. When the hearing aid user 4 arrives to the sport location 78, the smartphone 10 of the hearing aid user 4 and/or a sensor 80 communicates wirelessly with the hearing aid 2. Hereby, the smartphone 10 and/or the sensor 80 sends signals 16, 16' to the hearing aid device 4 in order to set the settings of the hearing aid device 4 according to predefined rules or schemes. As long as the hearing aid user 4 stays within the sport location 78, these settings are maintained.

The smartphone 10 may use a build-in GPS (Global Positioning System) receiver to determine the position of the user 4 of the hearing aid 2. The settings of a hearing aid device 2 according to an embodiment of the invention may be defined in dependence of the position of the user 4 of the hearing aid 2. In this way the settings of a hearing aid device 2 according to an embodiment of the invention may be determined merely on the basis of position data provided by a build-in GPS receiver (e.g. a GPS receiver of the user's smartphone).

Fig. 6 b) is a schematic view of how the settings of a hearing aid device 2 according to an embodiment of the invention are changed when the hearing aid user is traveling with bus or train.

The location 78' may be a bus or a train by way of example. The location may alternatively be the car of the hearing aid user 4. A sensor may be provided in the car of the hearing aid user 4.

The hearing aid user 4 is wearing a hearing aid device 2. When the hearing aid user 4 comes into a predefined location (e.g. during the ride home from work) the user's smartphone 10 or a sensor 80 communicates wirelessly with the hearing aid 2. The smartphone 10 or the sensor 80 sends signals 16, 16' to the hearing aid device 4 and sets the settings of the hearing aid device 4 according to predefined setting rules. As long as the hearing aid user 4 is in the bus or train the settings are maintained.

When the hearing aid user 4 leaves the bus or the train he is no longer in the location 78' and thus, a new set of predefined setting rules may be applied. The settings of a hearing aid device 2 may be determined on the basis of position data provided by a build-in GPS receiver and corresponding location dependent setting rules.

Fig. 6 c) is a schematic view of how the settings of a hearing aid 2 according to an embodiment of the invention can be changed when the hearing aid user 4 is outside walking his dog.

The hearing aid user 4 is wearing a hearing aid device 2. The hearing aid user 4 moreover has a smartphone 10 that is configure to communicate wirelessly with the hearing aid 2. The smartphone transmits signals 16 to the hearing aid device 2 and sets the settings of the hearing aid device 4 according to predefined setting rules.

The settings of a hearing aid device 2 is determined on the basis of position data 78" provided by a GPS receiver in the smartphone 10 and corresponding location dependent setting rules.

When the hearing aid user 4 is back from the walk, the position data triggers the smartphone 10 to send signals 16 to the hearing aid device 2 in order to change the settings.

Other environments may likewise be identified by external sensors and/or environment detection units or the hearing aid device/system and/or a positioning system (e.g. GPS) of the hearing aid device/system and used to apply specific hearing aid settings for the detected environment. Such environments may e.g. include watching TV at home or at a cinema, attending a lecture (church, school, etc.), driving a car. Alternatively or additionally, the external device (e.g. a smartphone) is configured to run an APP allowing a user to indicate which environment he or she is currently in.

Fig. 7 a) is a schematic view of a BTE hearing aid device 2 according to an embodiment of the invention that communicates with an external device 10 (e.g. a mobile phone 10). The communication may be conducted by means of a wireless technology standard for exchanging data, such as Bluetooth or another suitable (e.g. digital) standard. Another external device 80 such as a sensor 80 may communicate with the hearing aid device 2 (directly or via the smartphone). The communication link between the sensor 80 and the hearing aid device 2 may e.g. be defined by the Bluetooth Low Energy standard. The communication link between the mobile phone 10 and the hearing aid device 2 may e.g. be defined by the Bluetooth Low Energy standard (e.g. appropriately modified to include an audio layer).

The communication may be two-way as indicated in Fig. 7 a). Signals 16 are transmitted from the phone 10 and from the sensor 80, while other signals 16' are transmitted from the hearing aid device 2 to the phone 10 and the sensor 80, respectively.

Fig. 7 b) is a schematic view of another BTE hearing aid device 2 according to an embodiment of the invention. The BTE hearing aid 2 communicates with a mobile phone 10 by means of light 82. The light may have any suitable frequency (e.g. IR) and intensity. The hearing aid device 2 comprises a light sensor (not shown) for detecting the transmitted light signals 82.

Similarly, a sensor 80 is sending light signals 82 to the hearing aid device 2. The light sensor (not shown) of the hearing aid device 2 receives the transmitted light 82 and interprets the signal 82.

The hearing aid device 2 may also communicate with the phone 10 and the sensor 80 by means of light 82'. The transmission of light 82' from the hearing aid device to the phone 10 and to the sensor 80, respectively, is indicated on Fig. 7 b). The communication may be one-way or two-way.

Fig. 7 c) illustrates a schematic view of another BTE hearing aid device 2 according to an embodiment of the invention. The BTE hearing aid 2 communicates with at a mobile phone 10 by means of sound 84 of any suitable frequency (e.g. ultra sound) and intensity. The hearing aid device 2 comprises a sound sensor (e.g. a microphone) for detecting the transmitted sound signals 84.

An external sensor 80 is sends sound signals 84 to the hearing aid device 2. The sound sensor (not shown) of the hearing aid device 2 receives the transmitted sound 84 and interprets the signal 84.

The hearing aid device 2 may also communicate with the phone 10 and the sensor 80 by means of sound 84'. The transmission of sound 84' from the hearing aid device 2 to the phone 10 and the sensor 80, respectively, is indicated on Fig. 7 c). The communication may be one-way or two-way.

Fig. 8 illustrates a schematic view of additional applications (comprising e.g. APPs or firmware updates to provide specific further features of the hearing aid device/system) that may be added to a hearing aid device 2 or a hearing aid system according to an embodiment of the invention. Fig. 8 illustrates five application packages 98 listed next to each other. The highest ranging application package has number 9 and comprises 15 applications 86 graphically illustrated in the uppermost box next to the box with number 9.

Below this box, the second highest ranging application package having number 7 is arranged. It comprises 11 applications 86 graphically illustrated in the box next to the box with number 7.

Below this box the third highest ranging application package having number 5 is arranged. It comprises 8 applications 86 graphically illustrated in the box next to the box with number 5. The two first applications 94, 96 from the right are indicated in Fig. 8.

Below this box the second lowest ranging application package having number 3 is arranged. It comprises 5 applications graphically illustrated in the box next to the box with number 3.

At the bottom of Fig. 8, the lowest ranging application package having number 1 is arranged. It comprises 3 applications 88, 90, 92 graphically illustrated in the box next to the box with number 1.

If a hearing aid user has a hearing aid device 2 with a specific number of features (e.g. corresponding to application package number 1) the hearing aid user may after a while realise that some of the other applications are useful.

By using a hearing aid device or a hearing aid system according to an embodiment of the invention it is possible to buy access to other applications for a specific time, e.g. one week or one month for testing and then you may decide whether or not you want the applications or not. The applications may be downloaded via the Internet and installed on the hearing aid device and/or an external device (e.g. a smartphone).

In this way, it is possible to update your hearing aid device when required. Over the years, the hearing aid device may be updated to comprise all the applications that the hearing aid user finds useful. Accordingly, it is possible to update the hearing aid device to comprise some or all of the applications in any category 1, 3, 5, 7 or 9.

Fig. 9 a) is a schematic view of a hearing aid device 2 according to an embodiment of the invention that is receiving information from an external device 10. The external device 10 is a smartphone 10 that sends signals 16 wirelessly to the hearing aid device 2.

The hearing aid device 2 comprises an elongate body member and a sensor member 112 configured to detect a number of predefined parameters, e.g. parameters related to the hearing aid user. The sensor member 112 may comprise means for detecting electromagnetic radiation.

The hearing aid device 2 is an in-the-canal hearing aid 2 that has been inserted into the ear canal 100 of the hearing aid user. A pull-out string 104 is attached to the proximal end of the body member of the hearing aid device 2. A dome 102 is attached to a loudspeaker provided in the distal end of the hearing aid device 2 (e.g. to centrally locate the sound outlet in the ear canal).

The hearing aid device 2 may receive information 16 from the smartphone 10 regarding the activity of the hearing aid user, e.g. that the hearing aid user is: a) preparing himself for going to work in the morning (see Fig. 9 b), b) is at work (see Fig. 9 c) or is on his way back from work (see Fig. 9 d). Likewise information from a calendar function in the smartphone may be relied on, e.g. whether the current day is a workday or a holiday, and/or indications of current (planned) activities as reflected by the user's calendar entries (e.g. his private or working activities at a given point in time). In this way the smartphone 10 may keep the hearing aid device updated with information about the user of the hearing aid. Moreover, this information may be used to adjust a building tinnitus masker. In this way it is possible to add natural or artificial sound into hear(s) of the hearing aid user, in order to suppress or mask tinnitus. A specific tinnitus APP to be executed on the Smartphone may provide a user with an appropriate interface to control the points in time and or the activities where the playback of a tinnitus masking sequence is desirable. Such indication may e.g. be inserted via the calendar, e.g. by adding a 'tinnitus playback' icon to calendar activities, if such playback is desirable. If no playback of tinnitus sequence is desirable, no icon is inserted (or vice versa, whichever is the more convenient for the user). In a preferred embodiment, the user can customize the tinnitus sequence via the tinnitus APP (e.g. by selecting between a number of options via a touch sensitive screen on the smartphone, adjust the output level, e.g. make its level and or the sequence dependent on the current activity or the time of day, etc.). In an embodiment, the control of the tinnitus masker is dependent on one or more sensors, e.g. a movement sensor, e.g. an accelerometer.

Fig. 9 b) is a schematic view of a BTE hearing aid device 2 according to an embodiment of the invention. The hearing aid device 2 is receiving time dependent information 16 from an external device 10 (a smartphone 10) at seven o'clock in the morning (indicated by the clock 106). The smartphone 10 may have information related to the habit of the user during morning time. Thereby it is possible to change settings in the hearing aid device 2 in order to meet user specific demands e.g. specific processing settings (such as filtering settings or attenuation of specific frequencies, applying a tinnitus masker sequence, playing particular pieces of music, etc.).

Fig. 9 c) is a schematic view of a BTE hearing aid device 2 receiving time dependent information 16 from a smartphone 10 at 2 o'clock in the afternoon (indicated by the clock 106).

If the day is a working day, the hearing aid user will probably be at work. Thus, use specific settings may be applied in order to meet user specific requirements (e.g. further specified by the user's calendar entries, if located in or accessible to the smartphone).

If the day is a holiday, another set of settings may be applied.

The smartphone 10 may be adapted to provide time specific data to the hearing aid device 2 so that different settings can be applied on working days and on holidays by way of example. Similarly, the smartphone 10 may comprise information (e.g. calendar entries) about specific activities of the user and information about in which time periods the user performs these activities (e.g. sport).

Fig. 9 d) is a schematic view of a BTE hearing aid device 2 according to an embodiment of the invention. The hearing aid device 2 receives time dependent information from a smartphone 10 in the same manner as explained with reference to Fig. 9 b) and Fig. 9 c), however, the time is five in the afternoon (indicated by the clock 106) and the hearing aid user may be on the way back from work.

Applying this knowledge, it is possible to use the smartphone 10 to make sure that the settings of the hearing aid device 2 match the requirement (preferably predefined, e.g. via an APP running on the smartphone) of the hearing aid user.

Fig. 10 a) is a schematic view of a person 6 speaking to a hearing aid user 4 wearing a hearing aid 2 according to an embodiment of the invention. The hearing aid device 2 is a BTE hearing aid device attached behind the ear 18 of the hearing aid user 4.

Speech 16 from the speaking person 6 is picked up by the hearing aid device 2 and transmitted to the user's ear canal. During the conversation, the hearing aid user 4 may have difficulties to hear the person 6 clearly and distinctly. The hearing aid device 2 comprises means for recording the conversation or part of the conversation.

The hearing aid device 2 (or an external device, e.g. a smartphone, of a hearing aid system) comprises means for playing the recorded conversation or part of the conversation. Hereby it is possible for the hearing aid user to avoid saying: "I beg your pardon", if the hearing aid user misses a sentence or a word from the conversation. Instead, the hearing aid user is able to replay parts of the conversation.

The hearing aid device (or a hearing aid system) may comprise means for continuously recording the last predefined time period, e.g. 60 seconds.

Fig. 10 b) illustrates an example of a recorded soundtrack 110. The soundtrack 110 is recorded by using the hearing aid device 2 shown in Fig. 10 a) (or by an external device of a hearing aid system). The recorded soundtrack 110 is depicted as function of time 64.

A marked time period 108 is indicated with dotted lines. The marked time period 108 corresponds to a time bookmark or a time stamp made by the hearing aid user 4. Hereafter it is possible to locate the part of a conversation that is marked. This may save the hearing aid user 4 from spending a lot of time trying to locate the part of a conversation that he wants to hear again. Such activation of recording and marking of sound bookmarks to ease the finding of relevant segments to repeat may preferably be performed via an external device, e.g. via an APP of a smartphone.

The hearing aid 2 (or an external device of a hearing aid system) may comprise means for predicting what the hearing aid user 4 would like to have repeated. The means may include a method to locate proper pauses in the speech signal and suggest a sentence/word for the hearing aid user 4. Hereby, the hearing aid user 4 will be able to replay a suggested sentence/word on demand.

The hearing aid device 2 or hearing aid system may comprise an additional device, e.g. an audio gateway, a smartphone or other devices capable of recording, storing and playing the recorded soundtrack 110.

The hearing aid device 2 may comprise various signal processing means e.g. means for providing noise suppression. The hearing aid device 2 or the external device may comprise means for adjusting the suggested sentence e.g. by applying a longer or shorter replay time.

In an embodiment, the activation of the recording, storing and replay of the audio signal or a part thereof can be performed from the hearing aid device (e.g. using an activation element, e.g. a button) or a from a user interface on the external device, e.g. a smart phone. In an embodiment, the external device comprises various signal processing algorithms to enhance the input audio signal, e.g. level and frequency dependent amplification, noise suppression, etc.

Fig. 11 is a schematic view of a person 6 speaking to a hearing aid user wearing an in-the-canal hearing aid 2 according to an embodiment of the invention. The hearing aid device 2 has an elongated body member and a pull-out string 104 attached thereto. In the distal end of the body member a loudspeaker (not shown in Fig. 11) is provided. A dome 102 is attached to the loudspeaker. The hearing aid device 2 has been inserted into the ear canal 100 of the hearing aid user.

The hearing aid device 2 has no integrated microphone. Instead the sound 84 from the speaking person 6 is detected by the microphone of a smartphone 10. The smartphone 10 transmits a wireless signal 16 to the hearing aid device 2. The transmitted signal 16 is detected by the hearing aid device 2 that generates a sound signal that is transmitted

## EP 2 876 899 A1

to the ear drum 114 by means of a loudspeaker covered by a dome 102. Hereby it is possible to provide a more simple and compact hearing aid device 2. Omitting the microphone will make it possible to save space and thus bring the hearing aid device 2 deeply into the canal 10.

In an embodiment, the hearing aid system is configured to enable printing via an external device, e.g. a smartphone.

Once the hearing aid device is connected to a smartphone, the smartphone can be used to print information to paper, e.g.:

- via a printer that can be connected to the smartphone directly;
- via a printer connected to a PC that is connected to the smartphone;
- via a printer in the cloud;

The printing can e.g. be initiated:

    o by an APP on the smartphone;
    o by an application on the PC that is connected to the smartphone;
    o by the hearing aid (e.g. triggered by a push button or remote control action).

The following data can e.g. be printed:

- All kinds of information that can be printed from the fitting software;
- All kinds of information that can be printed from service software today;
- Some information that is targeted at the end-user (e.g. date of next

The invention is defined by the features of the independent claim(s). Preferred embodiments are defined in the dependent claims. Any reference numerals in the claims are intended to be non-limiting for their scope.

Some preferred embodiments have been shown in the foregoing, but it should be stressed that the invention is not limited to these, but may be embodied in other ways within the subject-matter defined in the following claims and equivalents thereof.

**List of reference numerals**

| 2, 2' | - Hearing aid device |
|---|---|
| 4, 4' | - Hearing aid user |
| 6 | - Person |
| 8, 8', 8" | - Sound characteristics |
| 10, 10' | - External device |
| 12 | - Earmould |
| 14 | - Ear hook |
| 16 | - Signal |
| 18 | - Ear |
| 20 | - Process |
| 22, 24, 26 | - Step |
| 28 | - Server |
| 30 | - Internet |
| 32 | - Coding procedure |
| 34, 34' | - Building |
| 36, 36' | - TV reportage |
| 38 | - Interview |
| 40, 40' | - Music |
| 42 | - Sound scene |
| 44 | - Scene descriptor |
| 46 | - Compressor |
| 48, 48', 48'', 48''' | - Compressor |
| 50, 50' | - Delivery interface |
| 52, 52', 52'', 52''' | - Decompressor |

| 54 | - Decompressor |
| 56 | - Compositor |
| 58, 58' | - Curve |
| 60 | - Output |
| 62 | - Frequency |
| 64 | - Time |
| 66 | - Curve |
| 68 | - Probability |
| $T_1, T_2, T_3$ | - Time period |
| $\mu_f, \mu_m$ | - Mean value |
| $\sigma_f, \sigma_m$ | - Standard deviation |
| F | - Fundamental frequency |
| 70 | - Male curve |
| 72 | - Female curve |
| 74, 76 | - Range |
| 78, 78', 78" | - Location |
| 80 | - Sensor |
| 82, 82' | - Light |
| 84, 84' | - Sound |
| 86, 88, 90 | - Application |
| 92, 94, 96 | - Application |
| 98 | - Application package |
| 100 | - Ear canal |
| 102 | - Dome |
| 104 | - Pull-out string |
| 106 | - Clock |
| 108 | - Marked time period |
| 110 | - Soundtrack |
| 112 | - Sensor member |
| 114 | - Ear drum |

**Claims**

1. A hearing aid device (2) comprising means for receiving signals (16) representing audio from a person (6), where the signals (16) are transmitted from an external device (10, 10') that receives audio from the person (6), where the hearing aid device (2) comprises means for analysing the transmitted signals (16), where the hearing aid device (2) further comprises means for determining a number of predefined sound characteristics (8, 8', 8") of the audio from the person (6) based on the transmitted signals (16), **characterised in that** the hearing aid device (2) comprises means for storing a number the determined sound characteristics (8, 8', 8") either in the hearing aid device or in an external device (10, 10') and that the hearing aid device (2) comprises means for identifying when a signal (16) received from the external device (10, 10') comprises audio that originates from a person (6) having sound characteristics (8, 8', 8") stored in the hearing aid device or in an external device (10, 10').

2. A hearing aid device (2) according to claim 1, **characterised in that** the hearing aid device (2) comprises means for processing a signal (16) in a predefined manner in order to provide enhancement of audio that originates from a person (6) having sound characteristics (8, 8', 8") stored in the hearing aid device or in an external device (10, 10').

3. A hearing aid device (2) according to claim 1, **characterised in that** the hearing aid device (2) comprises means for processing a signal (16) in a predefined manner in order to provide attenuation of audio that originates from a person (6) having sound characteristics (8, 8', 8") stored in the hearing aid device or in an external device (10, 10').

4. A hearing aid device (2) according to claim 1, **characterised in that** the hearing aid device (2) comprises means for identifying the fundamental frequency (F) and/or pitch of a voice of a person (6) on the basis of the audio from the person (6).

5. A hearing aid device (2) according to claim 1, **characterised in that** the hearing aid device (2) comprises means for identifying variations in fundamental frequency or pitch of a voice of a person (6) on the basis of the audio from the person (6).

6. A hearing aid device (2) according to one of the preceding claims, **characterised in that** the hearing aid device (2) comprises means for analysing the transmitted signals (16) during a phone conversation.

7. A hearing aid device (2) according to claim 6, **characterised in that** the hearing aid device (2) comprises means for storing the sound characteristics (8, 8', 8") of a person (6) and coupling the phone number of the person (6) with the sound characteristics (8, 8', 8").

8. A hearing aid device (2) according to any one of the preceding claims comprising an input transducer for receiving an acoustic signal from a user's surroundings and providing a corresponding input audio signal and/or a receiver for electronically receiving an input audio signal, a signal processing circuit for processing the input audio signal and an output means for providing an audible signal to the user in dependence on the processed audio signal, a forward path being defined by the input transducer(s), the signal processing circuit, and the output means, wherein the signal processing unit - in a normal mode of operation - is configured to process a signal of the forward path in a predefined manner in order to provide attenuation or gain of an input audio signal that originates from a person having sound characteristics stored in the hearing aid device or in an external device.

9. A hearing aid device (2) according to one of the preceding claims, **characterised in that** the hearing aid device (2) comprises means for setting at least a subset of the settings of the hearing aid device (2) in dependence of the location of the user (4) of the hearing aid (2).

10. A hearing aid device (2) according to one of the preceding claims, **characterised in that** the hearing aid device (2) comprises means for communicating with an external device (10) by means of light (82, 82') or sound (84, 84').

11. A hearing aid device (2) according to one of the preceding claims, **characterised in that** the hearing aid device (2) comprises means for receiving additional applications (86, 88, 90, 92, 94, 96).

12. A hearing aid device (2) according to one of the preceding claims, **characterised in that** the hearing aid device (2) comprises a sensor member (112) configured to detect a number of predefined parameters.

13. A hearing aid device (2) according to one of the preceding claims, **characterised in that** the hearing aid device (2) does not comprise any microphone and that the hearing aid device (2) comprises means for receiving a wirelessly transmitted signal (16) representing audio picked up by one or more microphone(s) of an external device (10, 10') transmitting the signal (16).

14. A hearing aid device (2) according to one of the preceding claims, **characterised in that** the hearing aid device (2) comprises means for recording and storing audio at the hearing aid device (2) or at an external device (10, 10'), where the hearing aid device (2) moreover comprises means for playing the recorded audio.

15. A hearing aid device (2) according to one of the preceding claims, **characterised in that** the hearing aid device (2) comprises means for storing sound characteristics (8) of a person (6) centrally at a predefined location at the Internet (30) and/or at a (dedicated) server (28).

16. A hearing aid device system (2, 10) comprising a hearing aid device (2) and an external device, wherein the hearing aid device (2) comprises means for receiving signals (16) representing audio from a person (6), where the signals (16) are transmitted from the external device (10) that receives audio from the person (6), where the hearing aid system (2, 10) comprises means for analysing the transmitted signals (16), where the hearing aid system (2, 10) further comprises means for determining a number of predefined sound characteristics (8, 8', 8") of the audio from the person (6) based on the transmitted signals (16), **characterised in that** the hearing aid system (2, 10) comprises means for storing a number of the determined sound characteristics (8, 8', 8") and that the hearing aid device (2) comprises means for identifying when a signal (16) received from the external device (10, 10') comprises audio that originates from a person (6) having sound characteristics (8, 8', 8") stored in the hearing aid system (2, 10).

17. A hearing aid system (2, 10) according to claim 16, **wherein** the hearing aid device (2) comprises means for processing a signal in a predefined manner in order to provide enhancement or attenuation of audio that originates from a person (6) having sound characteristics (8, 8', 8") stored in the hearing aid system (2, 10).

**18.** A hearing aid system (2, 10) according to claim 16 or 17 wherein the hearing aid device and the external device are configured to run an APP allowing a user to control or influence functionality of the hearing aid device or to process or display information related to the hearing aid device.

**19.** A hearing aid system (2, 10) according to any one of claims 16-18 configured to enable printing via the external device.

Fig. 1

Fig. 2

a)

b)

Fig. 3

Fig. 4

Fig. 5

Fig. 6

a)          b)          c)

Fig. 7

Fig. 8

Fig. 9

Fig. 10

Fig. 11

Europäisches
Patentamt

European
Patent Office

Office européen
des brevets

**EUROPEAN SEARCH REPORT**

Application Number

EP 13 19 4036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 528 356 A1 (OTICON AS [DK]) 28 November 2012 (2012-11-28) <br><br> * the whole document * <br> ----- | 1-6,8, 10,13, 16,17 | INV. H04R25/00 <br><br> ADD. G10L17/26 G10L25/90 |
| Y,D | EP 2 081 405 A1 (BERNAFON AG [CH]) 22 July 2009 (2009-07-22) * the whole document * <br> ----- | 1-5,8, 10,16,17 | |
| Y | US 6 453 284 B1 (PASCHALL D DWAYNE [US]) 17 September 2002 (2002-09-17) * the whole document * <br> ----- | 1-5,8, 10,16,17 | |

TECHNICAL FIELDS
SEARCHED (IPC)

H04R
G10L

~~The present search report has been drawn up for all claims~~

| Place of search | Date of completion of the search | Examiner |
|---|---|---|
| The Hague | 17 April 2014 | Streckfuss, Martin |

EPO FORM 1503 03.82 (P04C01)

Europäisches
Patentamt

European
Patent Office

Office européen
des brevets

Application Number

EP 13 19 4036

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 8, 10, 13, 16, 17

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 13 19 4036

The Search Division considers that the present European patent application does not comply with the requirements of unity of invention and relates to several inventions or groups of inventions, namely:

1. claims: 1-6, 8, 10, 13, 16, 17

   The single general technical concept of the subject-matter of claims 1 - 6, 8, 16, and 17 relates to speech signal processing for speaker identification and speech enhancement.

1.1. claims: 10, 13

   The single general technical concept of the subject-matter of claims 10 and 13 relates to data communication links.
   ---

2. claims: 7, 14, 15

   The single general technical concept of the subject-matter of claims 7, 14, and 15 relates to data recording and reproduction.
   ---

3. claim: 9

   The single general technical concept of the subject-matter of claim 9 relates to location based device operational modes.
   ---

4. claim: 12

   The single general technical concept of the subject-matter of claim 12 relates to parameter sensing.
   ---

5. claims: 11, 18

   The single general technical concept of the subject-matter of claims 11 and 18 relates to software applications management.
   ---

6. claim: 19

   The single general technical concept of the subject-matter of claim 19 relates to network printing.
   ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 13 19 4036

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2014

| Patent document cited in search report | | Publication date | Patent family member(s) | | Publication date |
|---|---|---|---|---|---|
| EP 2528356 | A1 | 28-11-2012 | NONE | | |
| EP 2081405 | A1 | 22-07-2009 | AU | 2009200179 A1 | 06-08-2009 |
| | | | CN | 101505448 A | 12-08-2009 |
| | | | DK | 2081405 T3 | 20-08-2012 |
| | | | EP | 2081405 A1 | 22-07-2009 |
| | | | US | 2009185704 A1 | 23-07-2009 |
| US 6453284 | B1 | 17-09-2002 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2081405 A1